# EUROPEAN PATENT APPLICATION

(11) **EP 3 187 403 A1**
(43) Date of publication of application: **05.07.2017**
(21) Application number: 15836088.3
(22) Date of filing: 07.08.2015
(51) Int. Cl.: B62K 21/02, B62K 21/04

(54) **BICYCLE FRONT FORK**

(30) Priority: 28.08.2014 CN 201420502577 U
(71) Applicant: Dahon Technologies Ltd., Shenzhen, Guangdong 518000 (CN)
(72) Inventor: HON, David Tak-Wei, Shenzhen Guangdong 518000 (CN); LI, Jingfeng, Shenzhen Guangdong 518000 (CN); LIAO, Rongguang, Shenzhen Guangdong 518000 (CN)
(74) Representative: Hellmich, Wolfgang
(86) International application number: PCT/CN2015/086366
(87) International publication number: WO 2016/029786

(57) **Abstract**

A bicycle front fork comprises two fork legs (1), and further comprises a base part (2). A sleeve hole (3) is formed in the middle of the flat base part (2), connection portions are arranged at two ends of the base part (2), and the connection portions are fixedly connected to the two fork legs (1). The whole front fork is simple in structure and light in weight due to the flat base part (2). The two fork legs (1) are seperated from the sleeve hole (3) in the base part (2), and can directly transmit to the connecting and bearing base part (2) the impact forces of the bicycle wheel on the ground and the weight of the bicycle load that are applied to the two fork legs (1), so that the action points of the applied forces are not centralized, and the forces from all directions can be dispersed, and therefore the front fork can resist breakage, and show sustainable and stable structure with high strength. When the bearing base part (2) is to be connected to the two fork legs (1), the fork legs (1) only need to be inserted into mounting holes (23) in the base part (2) and are fixed by direct welding or other fixing methods. The present bicycle front fork has a sustainable structure, and can be manufactured with simple process and low cost.

## Description

### TECHNICAL FIELD

The present application relates to a bicycle part, and particularly relates to a bicycle front fork.

### BACKGROUND OF THE INVENTION

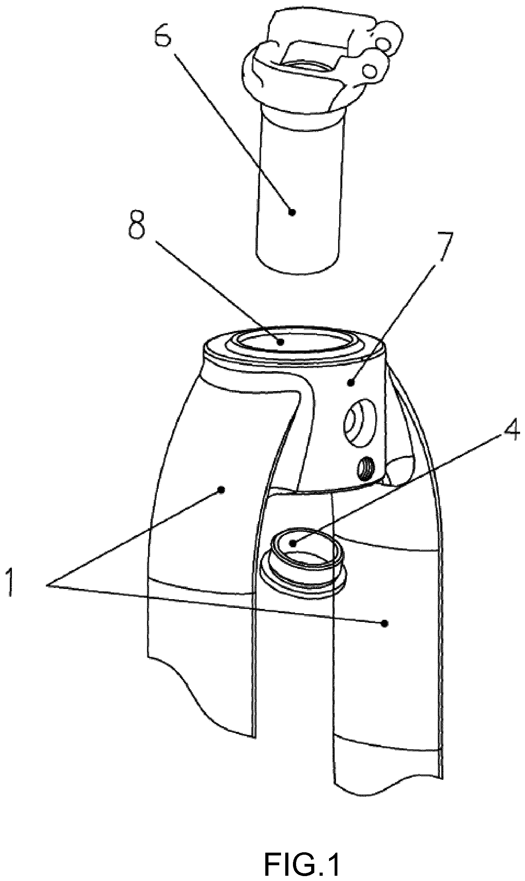

In the history of the development of the bicycle industry, for the previous bicycles, the front fork is provided with a front fork riser and when connected with a standpipe the front fork riser is inserted into the standpipe to realize the locking and fixing. In a current bicycle, the casing connected to the standpipe or the handlebar riser is set into the front fork and is locked at the middle bottom of the front fork, making the front fork more stable and private when connected to the casing that is connected with the standpipe or the handlebar riser. This front fork comprises a fork leg 1 and a bearing 7. The casing 6 connected to the standpipe or the handlebar riser is inserted into the hole 8 formed on the bearing 7. The hole 8 is formed on the bearing 7 and the casing 6 connected to the handlebar is inserted into the bearing 7. The bearing 7 is locked by the locking device disposed at the bottom of the hole 8, then the handlebar is connected to the front fork. But upper ends of the two fork legs 1 are bent inward and curved, and both upper ends of the two fork legs are provided with a base part which is equipped with a groove. Finally, the lower end of the bearing 7 is wrapped by two grooves and welded to form an integral one; the bearing 7 is located between the two fork legs, as shown in Figure 1. The processing precision of front fork of such structure has high requirement; the bearing 7 is too thick, and the structure is not reasonable.

### TECHNICAL PROBLEM

The objective of the present invention is to provide a bicycle front fork with a simple, reasonable structure as well as simple processing steps with low cost.

### SOLUTION TO THE PROBLEM

### Technical solution

The present application is realized as follows: a bicycle front fork, comprises two fork legs, wherein, further comprises a base part; a sleeve hole is formed in the middle of the base part; connection portions are arranged at two ends of the base part; and the connection portions are fixedly connected to the two fork legs.

The sleeve hole is axially configured with a first gap and a second gap; an adjusting device is disposed on the first gap; the adjusting device comprises a threaded hole disposed through the first gap and an adjusting screw matching the threaded hole.

There are two threaded holes and two adjusting screws; an axis of each of the two threaded holes is perpendicular to an axis of the sleeve hole; the two threaded holes are configured up and down; when the two adjusting screws are screwed into the corresponding threaded hole, the two adjusting screws are arranged in opposite directions.

Stepped holes are configured on the bottom of the sleeve holes.

The connection portions are mounting holes, and the two fork legs are configured through and fixedly connected to the mounting holes.

One side of the base part is provided with a square lug.

The base part is a flat structure.

The base part is a hollow structure.

The base part is formed by extrusion.

### THE BENEFICIAL EFFECT OF THE INVENTION

### Beneficial effect

The beneficial effects of the present application are the following: the sleeve holes are formed in the middle of the flat base part, and connection portions are arranged at two ends of the base part, and the connection portions are fixedly connected to the two fork legs. The whole front fork is simple in structure and light in weight due to the flat base part. The casing connected with the handlebar is inserted into the sleeve holes and is locked by the sleeve holes, making the front fork fixedly connected to the handlebar; the two fork legs are fixedly connected to the connection portions on the two ends of the base part, which only requires a simple and low-cost manufacturing process; the two fork legs are seperated from the sleeve hole in the base part, and can directly transmit to the connecting and bearing base part the impact forces of the bicycle wheel on the ground and the weight of the bicycle load that are applied to the two fork legs, so that the action points of the applied forces are not centralized, and the forces from all directions can be dispersed, and therefore the front fork can resist breakage, sustaining high strength and being structurally stable. When the bearing base part is to be connected to the two fork legs, the fork legs only need to be inserted into fixing holes in the base part and are fixed by direct welding or other fixing methods. The present bicycle front fork has a stable and sustainable structure with simple and low-cost manufacturing process. The base part and the two fork legs are square structure, and the strength of the base part and the two fork legs is increased because the square structure acts as a role of a stiffener.

### BRIEF DESCRIPTION OF THE DRAWINGS

Figure 1 shows the structure of the front fork in the art;
Figure 2 is a schematic exploded view of a bicycle front fork of the present application;
Figure 3 is a schematic view of a base part of a bicycle front fork of the present application;
Figure 4 is a schematic exploded view of a bicycle front fork of the present application in another perspective;
Figure 5 is an overall structure of a bicycle front fork of the present application;
Figure 6 is an overall structure of a bicycle front fork of the present application in another perspective.

### EMBODIMENT OF THE INVENTION

The bicycle front fork of the present application will now be described in further detail with reference to the accompanying drawings.

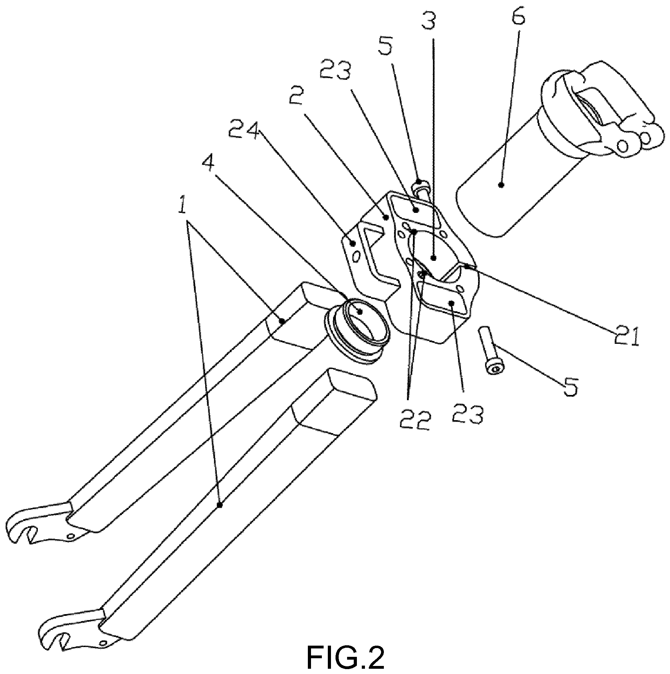

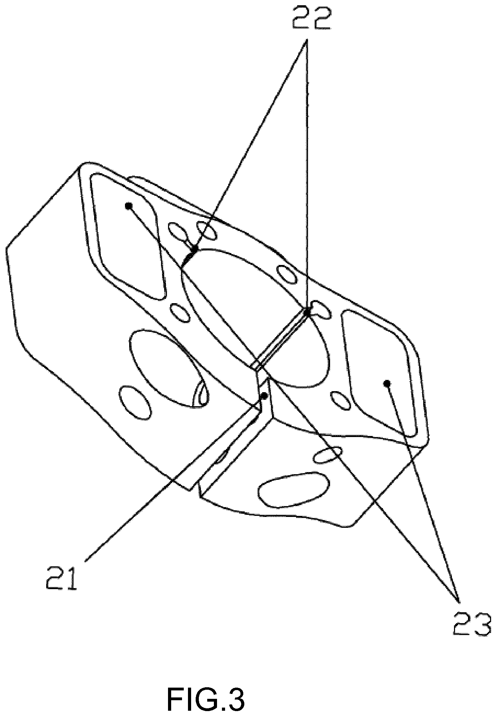

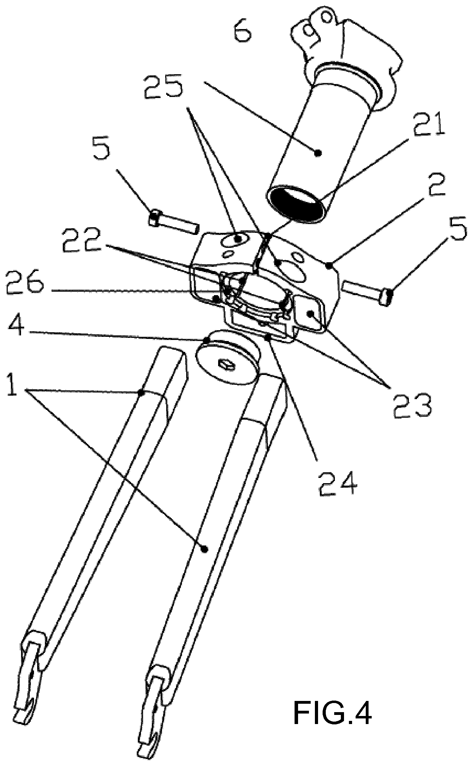

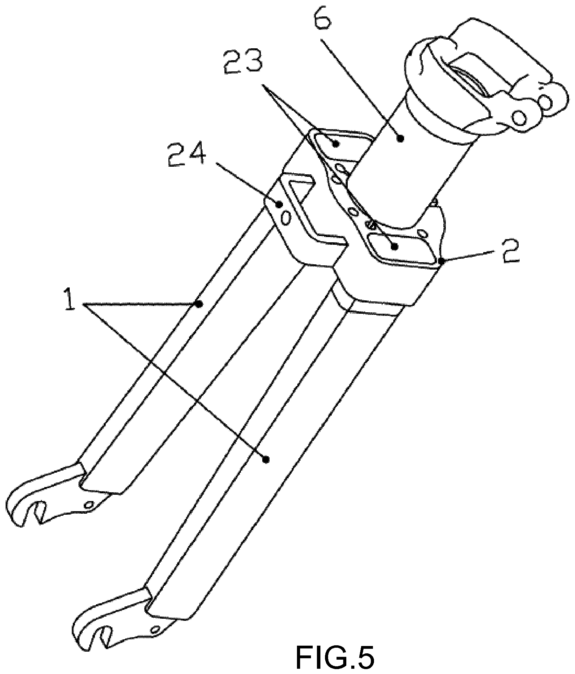

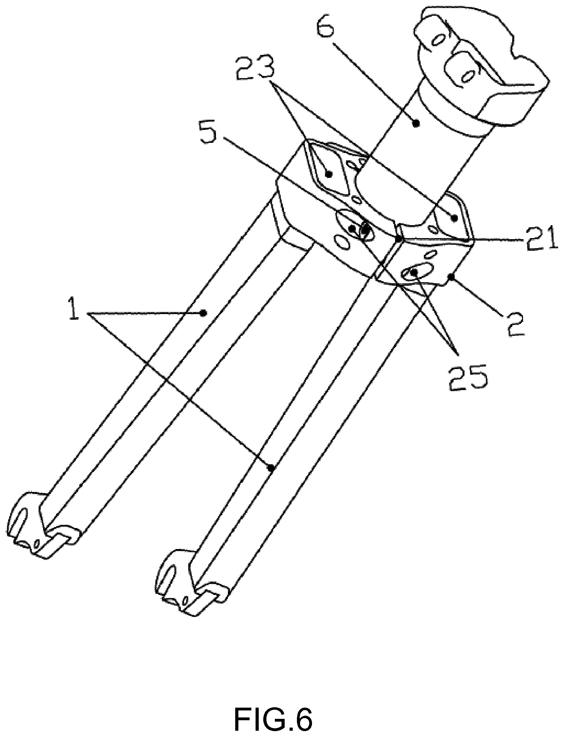

Now referring to Figure 2 to Figure 6, the bicycle front fork comprises two fork legs 1 and a base part 2. Both the two fork legs 1 and the base part 2 are square structure, and the capability of the bending resistance of the two fork legs 1 and the base part 2 is increased because the square structure acts as a role of a stiffener. The whole front fork does not appear to be heavy and is light in weight and beautiful in appearance due to the flat base part 2 with a flat and hollow structure, that is the upper and lower of the base part is more flat. One side of the base part 2 is provided with a square lug 24 which is conducive to make the fender and brake fixed, avoiding the fender being directly connected to the base part 2 in order to prevent the base part 2 from bearing high stress.

The sleeve hole 3 is formed in the middle of the base part 2. The connection portions are arranged at two ends of the base part 2, and the connection portions are the mounting holes 23. The mounting holes 23 at two ends of the sleeve hole 3 are symmetrical with respect to the sleeve hole 3 as a fulcrum. The mounting holes 23 are matched with the two fork legs 1. One end of the two fork legs 1 is disposed through the mounting holes 23 and is fixed in a welding way, and also it can be fixed in other ways, such as direct clamping and riveting; the other end of the two fork legs 1 is welded by a fork and connected by a fork to the hub of the wheel. The two fork legs 1 are inserted into and welded to the mounting holes 23, which ensures good stability and stably keeps the connection angle between the two fork lega 1 and the base part 2 as well as the size between the two fork legs 1. The base part 2 can be produced by an extrusion molding with low cost, and the integral molding makes the structure reasonable and stable.

The stepped holes 26 are disposed on the bottom of the sleeve hole 3. The front fork is fixedly connected to the handlebar in the following way: the sleeve 6 for connecting the handlebar passes through the head pipe and then through the sleeve hole 3, and is finally locked by the locking cover 4 at the stepped hole 26, and the locking cover 4 is abutted against the stepped hole 26. The locking cover 4 sinks into the stepped hole 26 and is abutted against the stepped hole 26, and the stepped hole 26 hides and protects the locking cover 4; the sleeve hole 3 is axially configured with a first gap 21 and a second gap 22; an adjusting device is disposed on the first gap 21; the adjusting device can be controlled to be clamped to reduce the gap of the first gap 21, thus the shape of the sleeve hole 3 is changed, and meanwhile the shape of the second gap 22 is changed too, making the diameter of the sleeve holes 3 smaller to clamp the sleeve 6, and hence the second gap 22 plays a key role for adjustment purpose. There are two second gaps 22 being configured to make the first gap 21 have a larger deformation. The adjusting device comprises a threaded hole 25 disposed through the first gap 21 and an adjusting screw 5 matching the threaded hole 25. There are two threaded holes 25 and two corresponding adjusting screws 5. An axis of each of the two threaded holes 25 is perpendicular to an axis of the sleeve holes 3, and the two threaded holes 25 are configured and arranged up and down. This arrangement is more advantageous for the first gap 21 to be deformed more easily when the adjustment screw 5 is locked. And when the two adjusting screws 5 are screwed into the threaded hole 25, the two adjusting screws 5 are arranged in opposite directions, making that the deformation force of the first gap 21 balanced and the lock in stable condition. The installation of handlebar is completed in such a simple and convenient installation process.

The above-mentioned specific implementations are intended to be exemplary not to be limiting. In the inspiration of the present invention, those ordinary skills in the art can also make many modifications without breaking away from the subject of the present invention and the protection scope of the claims. All these modifications belong to the protection of the present invention.

## Claims

1. A bicycle front fork, comprises two fork legs (1), wherein, further comprises a base part (2); a sleeve hole (3) is formed in the middle of the base part (2); connection portions are arranged at two ends of the base part (2); and the connection portions are fixedly connected to the two fork legs (1).

2. The bicycle front fork according to claim 1, wherein, the sleeve hole (3) is axially configured with a first gap (21) and a second gap (22); an adjusting device is disposed on the first gap (21); the adjusting device comprises a threaded hole (25) diposed through the first gap (21) and an adjusting screw (5) matching the threaded hole (25).

3. The bicycle front fork according to claim 2, wherein, there are two threaded holes (25) and two adjusting screws (5); an axis of each of the two threaded holes (25) is perpendicular to an axis of the sleeve hole (3); the two threaded holes (25) are configured up and down; when the two adjusting screws (5) are screwed into the corresponding threaded holes (25), the two adjusting screws (5) are arranged in opposite directions.

4. The bicycle front fork according to claim 3, wherein, stepped holes (26) are configured on the bottom of the sleeve hole (3).

5. The bicycle front fork according to claim 3, wherein, the connection portions are mounting holes (23), the two fork legs (1) are configured through and fixedly connected to the mounting holes (23).

6. The bicycle front fork according to claims 1-5, wherein, one side of the base part (2) is provided with a square lug (24).

7. The bicycle front fork according to claim 6, wherein, the base part (2) is a flat structure.

8. The bicycle front fork according to claim 6, wherein, the base part (2) is a hollow structure.

9. The bicycle front fork according to claim 6, wherein, the base part (2) is formed by extrusion.
